# EUROPÄISCHE PATENTSCHRIFT

(11) **EP 3 676 409 B1**
(45) Veröffentlichungstag und Bekanntmachung des Hinweises auf die Patenterteilung: **03.08.2022**
(21) Anmeldenummer: 18768789.2
(22) Anmeldetag: 24.08.2018
(51) Int. Cl.: C22B 7/04, C21B 5/00

(54) **VERFAHREN ZUR BEHANDLUNG VON SCHLACKE**
PROCESS FOR TREATMENT OF A SLAG
PROCÉDÉ DE TRAITEMENT D'UNE SCORIE

(30) Priorität: 28.08.2017 DE 102017119675
(43) Veröffentlichungstag der Anmeldung: 08.07.2020
(73) Patentinhaber: voestalpine Stahl GmbH, 4020 Linz (AT)
(72) Erfinder: SCHMID, Herbert, 4621 Sipbachzell (AT)
(74) Vertreter: HGF
(86) Internationale Anmeldenummer: PCT/EP2018/072904
(87) Internationale Veröffentlichungsnummer: WO 2019/042892

(56) Entgegenhaltungen:
- EP-A1- 2 767 597
- DE-A1- 2 648 220
- JP-A- S5 354 196

## Beschreibung

Die Erfindung betrifft ein Verfahren zum Behandeln von Konverterschlacke in der Stahlherstellung.

In der Stahlherstellung fallen in den unterschiedlichsten Bereichen Schlacken an. In der Metallverarbeitung dienen Schlacken üblicherweise entweder der Abdeckung einer flüssigen Metallschmelze, um diese gegen die Atmosphäre zu schützen oder der Aufnahme von Begleitmetallen aus der Schmelze, um die Schmelze von diesen Begleitelementen zu reinigen.

Üblicherweise sind derartige Schlacken im Wesentlichen mineralische Schlacken, die gegebenenfalls auch noch organische Bestandteile enthalten können.

Bei der Erzeugung von Stahl im Konverter und insbesondere im Linz-Donawitz-Konverter (LD-Konverter) wird zur Abdeckung der Stahlschmelze ebenfalls Schlacke verwendet bzw. entsteht teilweise Schlacke infolge der oxidierenden Behandlung. Es handelt sich hierbei üblicherweise um basische Schlacken auf der Basis von Kalk.

Beim Konverterabstich wird so abgestochen, dass einerseits der Stahl aus dem Konverter üblicherweise in eine Pfanne abgegossen wird, während die Schlacke in einen Schlackenbehälter abgegossen wird. Neben der Schlacke werden hierbei gewisse Mengen an Stahlschmelze mit in den Schlackenbehälter gegeben, zudem enthält die Schlacke selbst noch Eisen in Form von Eisenoxid.

Im Stand der Technik ist es bekannt, die Schlacke durch Schlackenbehandlungsverfahren aufzubereiten, denn die Schlacke ist insbesondere als Rohstoff für die Zementherstellung begehrt. Hierfür wird das in der LD-Schlacke enthaltene Eisenoxid im ersten Schritt zu einem Metallbad reduziert und dieses Metallbad anschließend durch oxidierende Behandlung entphosphort. Hierbei können alternierend oxidierende und reduzierende Behandlungen in ein und demselben Gefäß durchgeführt werden oder das Metall aus der reduzierenden Behandlung wird in eine Behandlungspfanne abgestochen und in diese zum oxidierenden Behandlungsstand transportiert, an welchem die Entphosphorung durchgeführt wird.

Ein Verfahren zur Behandlung von Schlacken aus Konvertern ist aus der EP 23 883 352 A1 bekannt, bei der in einem Gefäß LD-Schlacke reduziert wird und mineralische Bestandteile, wie Kohlenstoff, Silizium und Aluminium zugegeben werden. Hierbei geht es im Wesentlichen darum, das in der Schlacke noch enthaltene Eisen, welches dort als Eisenoxid vorliegt, zurückzugewinnen und aus der Schlacke zu entfernen.

Aus der WO 2004/101828 A1 ist ein Verfahren zum Verwerten von aus der Eisenhütten-Industrie stammenden oxidischen Eisenteilchen enthaltener Schlacke bekannt, wobei ein Reduktionsmittel zugegeben wird und eine Reduktion der oxidischen Eisenteilchen in der Schlacke durchgeführt wird. Hierfür wird die Schlacke in ein Reaktorgefäß chargiert und anschließend elektrisch aufgeheizt. Über einen längeren Zeitraum soll ein kohlenstoffhaltiges Reduktionsmittel eingeblasen werden. Nach der vollständigen Reduktion wird die Schlacke abgestochen und gegebenenfalls vorhandenes flüssiges Eisen ebenfalls, bis auf eine Kohlenstoff enthaltende Resteisenschmelze abgestochen.

Aus der EP 2 767 597 A1 ist ein Verfahren zur Reduktion von Stahlschlacke bekannt, bei der Konverterschlacke in ein entsprechendes Gefäß kontinuierlich oder intermittierend chargiert wird, wobei in dem Behandlungsgefäß eine geschmolzene Schlackenschicht auf einer schmelzflüssigen Eisenschicht vorhanden ist und das Gemenge elektrisch aufgeheizt wird und in einer nicht-oxidierenden Atmosphäre behandelt wird. Der Abstich des im Behandlungsgefäß entstehenden Eisens und der dort enthaltenen Schlacke erfolgt diskontinuierlich.

Ein vergleichbares Verfahren ist aus der EP 2 759 606 A1 bekannt, wobei dieses eine Variante des zuvor genannten Verfahrens ist. Dieses schlägt vor, noch weitere Rohstoffe dem Schlackenbad zuzugeben.

Aus der EP 0 934 432 B1 ist ein Verfahren zum Entchromen oder Abreichern des MgO-Gehaltes von Stahlschlacken bekannt, wobei in die flüssige Stahlschlacke Sauerstoff in einem Ausmaß eingetragen wird, welches ausreicht, um Eisen quantitativ zu Eisenoxid und wenigstens 5 Gew.-% des in der Schlacke enthaltenen Eisenoxids zu Eisen-3-Oxid zu überführen, die oxidierte Schlacke zu erstarren und zu zerkleinern und die gebildeten, paramagnetischen Anteile (Magnetit, Fe3O4) magnetisch separiert werden und von der entchromten Schlacke abgetrennt werden, wobei die flüssige Stahlschlacke durch Einbringen von Sauerstoff gefrischt wird, womit in der Stahlschlacke enthaltenes Resteisen quantitativ oxidiert wird, so dass die nachfolgende Zerkleinerung beispielsweise durch granulierendes Wasser oder unter Verwendung von Dampf gefahrlos vorgenommen werden kann.

JP S53 54196 A offenbart ein Verfahren zur Behandlung von Konverterschlacke zum Zwecke der Rückführung von Eisen, wobei eine Konverterschlacke mit einer bestimmten Kühlrate abgekühlt wird, so dass eine Entmischung' in eine erstarrende, Silikat- und Phosphor-reiche erste Fraktion und in eine sich darunter befindende, flüssige Eisenoxid-reiche zweite Fraktion stattgefunden hat.

Zudem ist es bekannt, eine Rückgewinnung von Eisen aus Stahlschlacken durch eine rasche Abkühlung der Schlacke oder durch die Zugabe von diversen Flussmitteln, wie Flussspat oder Eisenerz, durchzuführen.

Im Stand der Technik ist dabei von Nachteil, dass die Flussmittelzugabe teuer und aufwändig ist und teilweise umwelttechnisch problematisch ist.

Zudem ist die Eisen-Phosphor-Trennung problematisch, insbesondere ist generell bei allen Wiederaufbereitungsverfahren oft von Nachteil, dass bestimmte Bestandteile in den Kreislauf zurückgeführt werden, die sich im Kreislauf anreichern.

Aufgabe der Erfindung ist es, ein Verfahren zur Behandlung von Schlacke zu schaffen, mit dem in effizienter Weise das Eisen zurückgewonnen werden kann bei gleichzeitiger guter Eisen-Phosphor-Trennung und auch bei relativ geringen Eisenoxid-Gehalten.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Erfindungsgemäß gelingt die Eisenrückgewinnung aus insbesondere LD-Schlacke durch Phosphor-Abtrennung ohne aufwändige Reduktion in einer kostenintensiven Anlage.

Erfindungsgemäß soll das Verfahren die LD-Schlacke in eine eisenreiche und eine Silikat- und Phosphor-reiche Fraktion auftrennen, wobei dies nur gelingt, wenn ein gewisser Eisengehalt überschritten wird, der jedoch häufig nicht vorhanden ist. Demgemäß wird nach der Erfindung ein eisenreicher Teilstrom aus einer sehr eisenreichen Schlackencharge mit einer eisenärmeren Schlackencharge vermischt und durch Einblasen von Sauerstoff aufgeheizt und anschließend ein Entmischungseffekt ausgenutzt. Von einer eisenreichen Restschmelze wird jeweils ein Teilstrom der nächsten eisenärmeren Schlackencharge beigemengt. Der nicht rückgeführte Anteil wird separat abgekühlt, zerkleinert und über Sinteranlage und Hochofen in den Roheisenprozess eingebracht, wobei vorteilhafterweise eine hohe Rückgewinnung des Eisens bei geringer Rückverfrachtung von Phosphor gelingt.

Erfindungsgemäß werden die unterschiedlichen Erstarrungstemperaturen der Kalziumsilikate und der eisenreichen Phasen, also FeO und Ferrit, ausgenutzt. Damit es jedoch zu einer Entmischung kommt, muss ständig eine FeO-reichere Schmelze aus vorherigen Behandlungs-Chargen zugefügt werden.

Erfindungsgemäß kann dies zum Beispiel durch Rückführung, Vermischung, Abkühlung und Entmischung bei der Erstarrung im Schlackenkübel erfolgen oder in einem zwei Kammern umfassenden Reaktionsgefäß, wobei in einer ersten Kammer die Vermischung von frisch angelieferter LD-Schlacke mit Restschmelze aus vorangegangenen Chargen sowie dem Aufheizen und Vermischen durch Einblasen von Sauerstoff erfolgt und in der zweiten Kammer die Beruhigung, langsame Abkühlung, Erstarrung und Abzug sowohl der Silikat- und Phosphor-reichen oberen Fraktionen als auch der unteren, noch flüssigen eisenreichen Restschmelze erfolgt.

Demzufolge findet somit eine fraktionierte Kristallisation in den Mischungen statt, wobei zunächst phosphorhaltige Dikalziumsilikate in dem oberen Bereich eines Reaktionsgefäßes angesammelt werden und dort durch die Auskristallisierung erstarren, während noch flüssige, mit Eisenoxiden angereicherte, an Phosphor und Silikaten verarmte Restschmelze unten angesammelt wird.

Wie bereits ausgeführt, wird ein Teilstrom genau dieser eisenreichen Silikat- und Phosphorarmen Restschmelze der nächsten Schlackencharge zugemischt und das Gemisch mit Sauerstoff geheizt und dann langsam abgekühlt.

Somit dient die eisenreiche Restschmelze sozusagen als Lösungsmittel zur Verbesserung der Entmischung.

Um den gewünschten Entmischungseffekt zu erzielen, muss der Gehalt an Eisenoxid 35% betragen oder darüber liegen.

Das Ergebnis der Entmischung ist dann eine Restschmelze mit einem eisenreichen Produkt, welches mehr als 50% Eisenoxid enthält und ein eisenarmes, aber Silikat- und Phosphorreiches Erstarrungsprodukt mit einem Gehalt von etwa 20% Eisenoxid.

Die Erfindung wird anhand einer Zeichnung beispielhaft erläutert. Es zeigen dabei:
- Figur 1:: ein Ablaufschema als Prinzipsskizze, zeigend das erfindungsgemäße Verfahren;

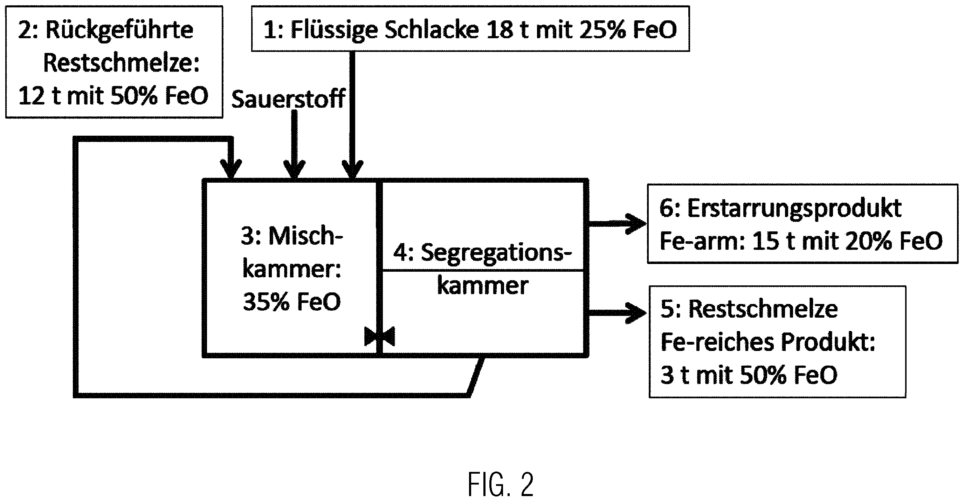

- Figur 2:: die Prinzipsskizze und ein Massenstromdiagramm zu einem zweiten Ausführungsbeispiel;

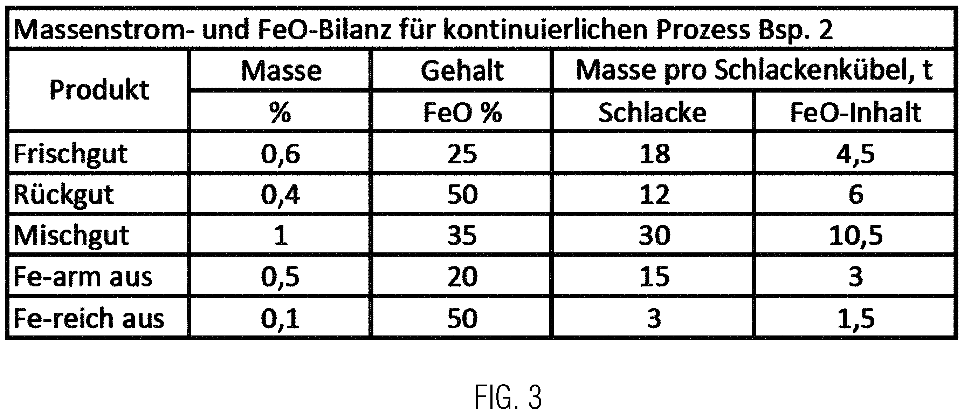

- Figur 3:: eine Tabelle, zeigend eine Massenstrom- und FeO-Bilanz für einen kontinuierlichen Prozess gemäß Beispiel 2;
- Figur 4:: beispielhafte Analysenwerte für die im Prozess anfallenden Chargen.

Erfindungsgemäß wurde erkannt, dass eine - bislang nicht durchgeführte - Rückgewinnung von Eisenoxid aus LD-Schlacken dadurch gelingt, dass die anfallende LD-Schlacke so behandelt wird, dass eine Entmischung in eine FeO-reiche Fraktion und eine FeO-arme Fraktion stattfindet.

Hierbei gelingt diese Entmischung allein dadurch, dass nach der Behandlung ein eisenreicher Schlackenteilstrom rückgeführt wird und den FeO-Gehalt der eingesetzten Schlacke vor der Behandlung auf den erforderlichen Wert von >35% einstellt.

Erst bei Eisenoxidgehalten oberhalb von 35% tritt der Entmischungseffekt auf, der dann zu einem relativ großen FeO-armen Teilstrom führt und zu einem relativ kleinen FeO-reichen Teilstrom. Erfindungsgemäß wird dieser FeO-reiche Teilstrom partiell dafür genutzt, frisch eingesetzte Schlacke im FeO-Gehalt zu erhöhen, so dass diese über 35% FeO besitzt. Diese im FeO-Gehalt eingestellte Schmelze wird mit einer Sauerstofflanze behandelt, wodurch sich heftige Turbulenzen bilden, die zu einer guten Durchmischung führen und die Oxidation des metallischen und zweiwertigen Eisens einen deutlichen Temperaturanstieg bewirkt.

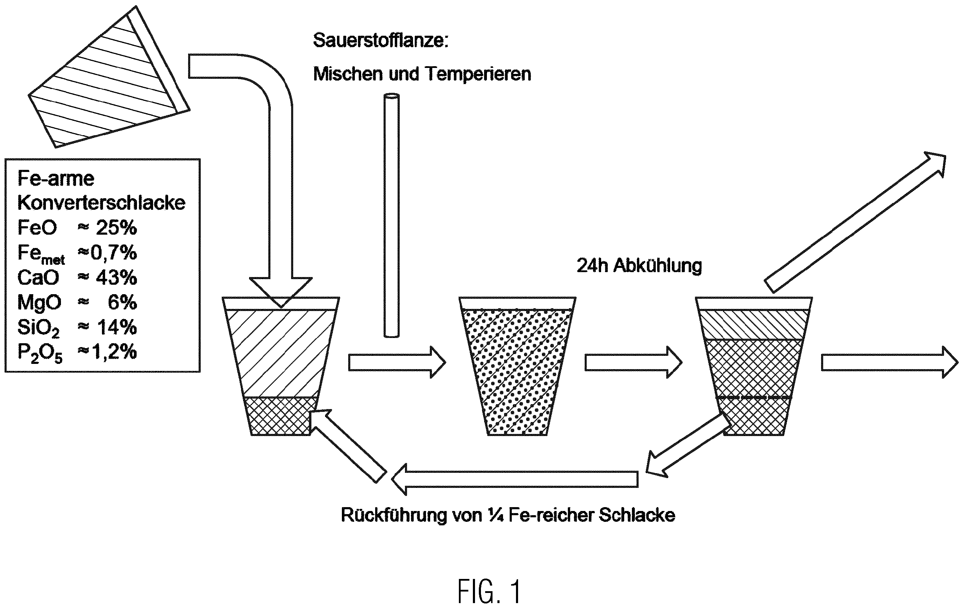

Beispielsweise (Figur 1) besitzt eine eisenarme Konverterschlacke einen FeO-Gehalt von 25%, einen metallischen Eisengehalt von 0,7%, einen Kalziumoxid-Gehalt von 43%, einen Magnesium-Oxid-Gehalt von 6%, einen Silizium-Oxid-Anteil von 15% und einen Phosphor-Oxid-Anteil von 1,2%. Diese Schlacke wird einem Behältnis aufgegeben und einer eisenreichen Restschmelze aus einer vorhergehenden Behandlung zugefügt. Diese eisenreiche Restschmelze besitzt beispielsweise einen Eisenoxid-Gehalt von 55%, einen metallischen Eisengehalt von 1,8%, einen Kalzium-Oxid-Gehalt von 21%, einen Magnesium-Oxid-Gehalt von 7%, einen Silizium-Dioxid-Anteil von 6% und einen Phosphor-Oxid-Gehalt von 0,5%. Aus der Kenntnis der Analysenwerte lässt sich somit in einfacher Weise so viel eisenreiche Restschmelze zur eisenarmen Konverterschlacke hinzugeben, dass der Gesamt-Eisenoxid-Gehalt auf die erforderlichen 35% eingestellt wird.

Diese Gesamtmischung wird anschließend mit einer Sauerstofflanze bearbeitet, insbesondere wird Sauerstoff aufgeblasen, wodurch es, wie bereits ausgeführt, zu dem Aufheizungs- und Durchmischungseffekt führt. Diese Schlackenmischung wird anschließend 24 Stunden abkühlen gelassen, woraus sich dann eine Entmischung ergibt aus einer oben aufliegenden, erstarrten eisenarmen Restschmelze, die einen Eisenoxid-Gehalt von 21%, einen metallischen Eisengehalt von 0,3%, einen Kalzium-Oxid-Gehalt von 47%, einen Magnesium-Oxid-Gehalt von 5,5%, einen Silizium-Oxid-Gehalt von 16% und einen Phosphor-Oxid-Gehalt von 1,3% besitzt. Unterhalb dieser eisenarmen Restschmelze hat sich die bereits beschriebene eisenreiche Restschmelze angesammelt, die dann der eisenarmen Konverterschlacke wieder zugeführt werden kann.

Grundsätzlich ist hierbei das Verfahren in geringfügig unterschiedlichen Ausführungsformen denkbar. Bei einer ersten Ausführungsform wird ein leerer Schlackenkübel mit einer LD-Konverterschlacke gefüllt, die der Analyse nach eisenreich ist (wie dies ab und zu auftritt). Nach 24 Stunden wird der aus erstarrter Schlacke gebildete, sogenannte Deckel aufgeschlagen und die verbliebende Restschmelze in einen leeren Schlackenkübel gefüllt. Während des Umfüllens wird eine Probe für die chemische Analyse gezogen und die Temperatur gemessen. Die Temperatur beträgt 1280°C, was bereits nah an der Erstarrungstemperatur von Kalziumferriten liegt. Auf diese Restschmelze wird eine eisenarme Konverterschlacke gegossen. Von den Gehalten her ist der Schlackenkübel zu ca. ¼ mit der eisenreichen Restschmelze gefüllt. Anschließend wird das Gemisch aus ¼ eisenreicherer Schmelze und ¾ eisenarmer Konverterschlacke mit einer Sauerstofflanze behandelt. Durch den Injektionsstrahl bilden sich die heftigen Turbulenzen, die zu einer guten Durchmischung der beiden Schlackensorten führen und die Oxidation des metallischen und zweiwertigen Eisens bewirkt einen deutlichen Temperaturanstieg. Diese aufgeheizte und durchmischte Schlacke wird zugedeckt und 24 Stunden stehen gelassen und danach erneut der Deckel aufgeschlagen und von der erstarrten Kruste sowie der verbliebenen Restschmelze Proben genommen.

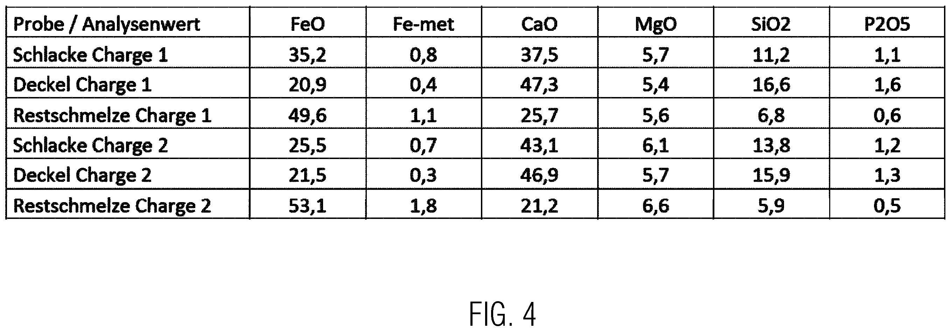

Die chemischen Analysenwerte sind in Figur 4 aufgelistet. Hierbei ist FeO als Sammelanalyse für das gesamte oxidisch gebundene Eisen zu sehen, berechnet aus dem gesamten metallischen Eisen. Es zeigt sich, dass die eisenreiche erste Schlackencharge einen FeO-Gehalt von 35,2% besitzt, der die Entmischung ermöglicht. Der sich hierauf bildende mineralische Deckel besitzt einen Eisenoxid-Gehalt von 20,9%, wobei die gebildete Restschmelze unter dem Deckel einen FeO-Gehalt von 49,6% besitzt.

Die anschließend zugesetzte eisenarme Konverterschlacke besitzt einen FeO-Gehalt von 25,5%, der Deckel von 21,5%.

Nach der Sauerstoffbehandlung und der 24-stündigen Ruhephase besitzt die eisenreche Restschmelze hieraus einen FeO-Gehalt von 53,1%, so dass diese Restschmelze wiederum gut geeignet ist, um eine eisenarme Konverterschlackencharge im Eisengehalt über die erforderlichen 35% anzuheben.

Für den Start des Verfahrens ist es somit günstig, abzuwarten, bis eine sehr eisenreiche Konverterschlacke vorliegt, um eine Entmischung zu provozieren und somit einen Grundbestand an sehr eisenreicher Restschmelze nach der Behandlung zu legen.

Anschließend kann erfindungsgemäß durch die Zugabe der sehr eisenreichen Restschmelze aus der Entmischung der eisenreichen Konverterschlacke auch jede nachfolgende eisenarme Konverterschlacke zur Entmischung gebracht werden.

Bei einer weiteren vorteilhaften Ausführungsform wird ein entsprechendes Behandlungsgefäß vorgesehen, wobei das Behandlungsgefäß zwei Kammern besitzt, die durch eine Zwischenwandung getrennt sind. Unmittelbar über dem Wannenboden besitzt die Zwischenwand fensterartige Öffnungen, so dass beide Kammern miteinander kommunizieren können, wenn dies gewünscht ist.

Zunächst wird flüssige Konverterschlacke direkt in die erste Kammer eingefüllt. Handelt es sich um eine sehr Eisenoxid-reiche Konverterschlacke, kann diese anschließend mit Sauerstoff behandelt werden.

Die Erstarrung der Schlacke beginnt durch Kristallisation der Silikate, jedoch wird in der ersten Kammer die Schlacke durch die Oxidation des metallischen und zweiwertigen Eisens mit dem eingebrachten Sauerstoff immer flüssig gehalten. Durch die bodennahe Öffnung in der Trennwand fließt ständig Schlacke in die zweite Kammer, die als Beruhigungs- und Sedimentationsbecken ausgeführt ist.

Diese zweite Kammer wird vorteilhafterweise mit einer aus der Entschwefelung von flüssigem Roheisen bekannten Abkämmvorrichtung ausgestattet. Zusätzlich befindet sich dort eine Einrichtung zum Abschlagen von Krusten aus erstarrten Schlacken. Mit der Abkämmvorrichtung werden die bereits erstarrten und überwiegend aus Silikaten bestehenden, auf der gerade noch flüssigen und oberflächlich kontinuierlich erstarrenden Schlacke schwimmenden festen Schlackenbrocken abgezogen und sofern erforderlich vorher losgebrochen.

In Intervallen, die sich zur Aufrechterhaltung eines möglichst konstanten Badspiegels nach der Belieferung mit frischer Schlacke richten, wird auch die am Boden angesammelte flüssige eisenreiche Restschmelze abgezogen und teilweise wieder in Kammer 1 zurückgeführt, um stets eine gute Entmischung durch einen ausreichend hohen FeO-Gehalt zu ermöglichen.

Auch bei dieser Ausführungsform kann zunächst eine (zufällig) angefallene, sehr eisenreiche Konverterschlacke mit einem FeO-Gehalt von über 35% eingesetzt werden. Alternativ hierzu kann auch eine eisenärmere Konverterschlacke eingesetzt werden und dem entsprechend, wie später im kontinuierlichen Prozess dann auch, schon eine vorher gesammelte, flüssige FeO-reiche Restschmelze eingesetzt werden.

Bei der Erfindung ist von Vorteil, dass ohne großen Aufwand und insbesondere ohne die Zugabe von prozessfremden Zusatzstoffen die Trennung von Konverterschlacke in eine Eisenoxid-reiche Fraktion und in eine Silizium- und Phosphor-reiche Fraktion vorgenommen werden kann, so dass die eisenreiche Restschmelze dem Hochofenprozess erneut zugeführt und damit Eisen zurückgewonnen werden kann.

## Patentansprüche

1. Verfahren zur Behandlung von Konverterschlacke zum Zwecke der Rückführung von Eisen, wobei eine Konverterschlacke mit Sauerstoff in Kontakt gebracht wird, derart, dass durch Turbulenzen die Schlacke durchmischt wird und vorhandene Eisen- und Eisenoxid-Bestandteile aufoxidiert werden und die Schlacke anschließend so lange in dem Gefäß oder einem Gefäß stehen gelassen wird, bis eine Entmischung in eine erstarrende, Silikat- und Phosphor-reiche erste Fraktion stattgefunden hat und in eine sich darunter befindende, flüssige Eisenoxid-reiche zweite Fraktion stattgefunden hat, wobei die eingesetzte Konverterschlacke mit einem Teilstrom aus der Eisenoxid-reichen zweiten Fraktion derart vermischt wird, dass der FeO-Gehalt in Summe der mit Sauerstoff zu behandelnden Schlacke über 35 Gew.-% beträgt, so dass die Entmischung in zwei Fraktionen ermöglicht ist.

2. Verfahren nach Anspruch 1, **dadurch gekennzeichnet, dass** die Schlacke nach der Sauerstoffbehandlung 24 Stunden ruhen gelassen wird.

3. Verfahren nach Anspruch 1 oder 2, **dadurch gekennzeichnet, dass** zur Kontaktierung der Schlacke mit Sauerstoff Sauerstoff oder Luft oder Sauerstoff-Luft- oder Sauerstoff-GasGemische auf- oder eingeblasen werden.

4. Verfahren nach einem der vorhergehenden Ansprüche, **dadurch gekennzeichnet, dass** der FeO- und Eisengehalt der anfallenden Konverterschlacke gemessen wird und der Eisengehalt der nach der Behandlung und nach der Ruhezeit entstandenen flüssigen Restschmelzegemische gemessen wird und anschließend das Mischungsverhältnis der beiden flüssigen Schmelzen so eingestellt wird, dass nach der Durchmischung ein FeO-Gehalt von über 35% erzielt wird.

5. Verfahren nach einem der vorhergehenden Ansprüche, **dadurch gekennzeichnet, dass** die Konverterschlacke in ein Behältnis chargiert wird und diesem Behältnis anschließend oder zuvor entsprechend der Berechnung die eisenreiche Restschmelze zugegeben wird und anschließend die Sauerstoffbehandlung in dem Gefäß stattfindet und das Gefäß anschließend entsprechend ruhen gelassen wird, bis die Erstarrung der ersten Fraktion stattgefunden hat und darunter die zweite, flüssige Fraktion vorhanden ist.

6. Verfahren nach einem der Ansprüche 1 bis 4, **dadurch gekennzeichnet, dass** ein Gefäß mit zwei Kammern verwendet wird, wobei die beiden Kammern des Gefäßes mit einer Zwischenwand voneinander getrennt sind, wobei oberhalb des Wannenbodens die Zwischenwand Öffnungen besitzt, wobei die erste Kammer mit flüssiger Konverterschlacke befüllt wird und nach jeder Befüllung der ersten Kammer mit einer Schlackencharge in der ersten Kammer über die Schlackencharge mit Sauerstoff gebracht wird, indem Sauerstoff oder ein sauerstoffhaltiges Gas aufgeblasen oder durchgeblasen wird, wobei durch die bodennahe Öffnung in der Trennwand Schlacke in die zweite Kammer fließt, die als Beruhigungs- und Sedimentationsbecken ausgebildet ist, wobei die zweite Kammer mit einer Abkämmeinrichtung ausgebildet ist, wobei erstarrte, überwiegend aus Silikaten bestehende Schlacken abgezogen werden, wobei die Zuführung mit frischer Schlacke so stattfindet, dass ein möglichst konstanter Badspiegel in den Kammern besteht, wobei am Boden angesammelte, flüssige, FeO-reiche Restschmelze abgezogen und der Kammer (1) zugeführt wird, um den erforderlichen FeO-Gehalt einzustellen.

7. Verfahren nach Anspruch 6, **dadurch gekennzeichnet, dass** der Eisengehalt der frisch zugeführten Schlacke kontinuierlich gemessen wird und der FeO-Gehalt der Restschmelze gemessen wird, um im kontinuierlichen Prozess einen stets über 35% liegenden FeO-Gehalt einzustellen.

## Claims

1. Method for treating converter slag for the purpose of recovering iron, wherein converter slag is exposed to oxygen in a way that through turbulence the slag is mixed and existing iron and iron oxide components are oxidised and the slag is left to stand in said vessel or a vessel until a segregation into a solidifying, silicate-rich and phosphorus-rich first fraction has taken place and an underlying, liquid iron oxide-rich second fraction has taken place, wherein the added converter slag is mixed with a partial flow from the iron oxide-rich second fraction such that the FeO content and the slag to be treated with oxygen amounts in total to more than 35 wt-%, such that the segregation in two fractions can be achieved.

2. Method according to Claim 1, **characterised in that** after oxygen treatment the slag is allowed to settle for 24 hours.

3. Method according to Claim 1 or 2, **characterised in that** to expose the slag to oxygen, oxygen or air or oxygen-air or oxygen-gas mixtures are blown on or in.

4. Method according to one of the preceding claims, **characterised in that** the FeO and iron content of the resulting converter slag is measured and the iron content of the liquid residual melt mixtures produced after the treatment and settling time is measured and the mixing ratio of the two liquid melts adjusted in a way that after mixing an FeO content of over 35% is achieved.

5. Method according to one of the preceding claims, **characterised in that** the converter slag is charged into a receptacle and the iron-rich residual melt is fed into said receptacle subsequently or previously according to the calculation, whereupon the oxygen treatment takes place in the vessel and the vessel is allowed to settle accordingly until the solidification of the first fraction has taken place and the second liquid fraction is present below.

6. Method according to one of Claims 1 to 4, **characterised in that** a vessel with two chambers is used, wherein the two chambers of the vessel are separated from each other by a partition, wherein above the bath bottom the partition has openings, wherein the first chamber is filled with liquid converter slag and after each filling of a slag charge into the first chamber oxygen is introduced over the slag charge in the first chamber, **in that** oxygen or an oxygen-containing gas is blown onto or blown through, wherein slag flows into the second chamber through the opening in the partition close to the bottom, which is formed as a settling and sedimentation basin, wherein the second chamber is formed with a comb device, wherein solidified slags consisting mainly of silicates are drawn off, wherein the addition of fresh slag takes place such that a bath level in the chambers that is as constant as possible is achieved, wherein liquid, FeO-rich residual melt that has accumulated at the bottom is drawn off and fed to the chamber (1) in order to adjust to the required FeO content.

7. Method according to Claim 6, **characterised in that** the iron content of the freshly added slag is continuously measured and the FeO content of the residual melt is measured in order to adjust such that in the continuous process an FeO content of more than 35% is always maintained.

## Revendications

1. Procédé de traitement de laitier de convertisseur à des fins de recyclage de fer, dans lequel un laitier de convertisseur est amené en contact avec de l'oxygène, de telle sorte que le laitier soit mélangé par turbulence et que les composants de fer et d'oxyde de fer existants soient oxydés et que le laitier soit ensuite laissé au repos dans la cuve ou une cuve jusqu'à ce qu'une ségrégation en une première fraction se solidifiant, riche en silicate et en phosphore, et en une deuxième fraction liquide, riche en oxyde de fer, située en dessous ait lieu, dans lequel le laitier de convertisseur usagé est mélangé à un flux partiel de la deuxième fraction riche en oxyde de fer, de telle sorte que la teneur en FeO au total du laitier à traiter à l'oxygène soit supérieure à 35 % en poids, de sorte que la ségrégation en deux fractions soit rendue possible.

2. Procédé selon la revendication 1, **caractérisé en ce que** le laitier est laissé au repos pendant 24 heures après le traitement à l'oxygène.

3. Procédé selon la revendication 1 ou 2, **caractérisé en ce que** pour amener le laitier en contact avec de l'oxygène, on insuffle de l'oxygène ou de l'air ou des mélanges oxygène-air ou oxygène-gaz.

4. Procédé selon une quelconque des revendications précédentes, **caractérisé en ce qu'**on mesure la teneur en FeO et en fer du laitier de convertisseur résultant et la teneur en fer du mélange de masse fondue résiduelle liquide résultant après le traitement et après la période de repos, puis le rapport de mélange des deux masses fondues liquides est ajusté de manière à obtenir une teneur en FeO supérieure à 35 % après mélange.

5. Procédé selon une quelconque des revendications précédentes, **caractérisé en ce que** le laitier de convertisseur est chargé dans une cuve et la masse fondue résiduelle riche en fer est ajoutée dans cette cuve après ou au préalable conformément au calcul, puis le traitement à l'oxygène a lieu dans la cuve et la cuve est alors laissée reposer en conséquence jusqu'à ce que la première fraction liquide se soit solidifiée et que la deuxième fraction liquide soit présente au-dessous.

6. Procédé selon une quelconque des revendications 1 à 4, **caractérisé en ce qu'**on utilise une cuve à deux chambres, dans lequel les deux chambres de la cuve sont séparées l'une de l'autre par une paroi de séparation, dans lequel au-dessus du plancher de la cuve la paroi de séparation possède des ouvertures, dans lequel la première chambre est remplie de laitier de convertisseur liquide et après chaque remplissage de la première chambre avec une charge de laitier, de l'oxygène ou un gaz contenant de l'oxygène est amené dans la première chambre au-dessus de la charge de laitier par soufflage par le haut ou soufflage à travers, dans lequel le laitier s'écoule à travers l'ouverture au niveau du sol de la paroi de séparation dans la deuxième chambre, qui est conçue comme un bassin de stabilisation et de sédimentation, dans lequel la deuxième chambre est conçue avec un dispositif de peignage, dans lequel le laitier solidifié constitué majoritairement de silicates est soutiré, dans lequel l'alimentation en laitier frais s'effectue de telle sorte que le niveau du bain dans les chambres soit le plus constant possible, dans lequel la masse fondue résiduelle liquide riche en FeO accumulée au fond est aspirée et acheminée vers la chambre (1), afin de régler la teneur en FeO requise.

7. Procédé selon la revendication 6, **caractérisé en ce que** la teneur en fer du laitier fraîchement alimenté est mesurée en continu et la teneur en FeO de la masse fondue résiduelle est mesurée afin de régler une teneur en FeO toujours supérieure à 35 % dans le procédé continu.
